Europäisches Patentamt

European Patent Office

Office européen des brevets

(19)

(11) Publication number: **0 025 672**
**A1**

# EUROPEAN PATENT APPLICATION

(21) Application number: 80303096.4

(22) Date of filing: 04.09.80

(51) Int. Cl.³: **G 03 F 1/00, H 04 N 1/40**

(30) Priority: 10.09.79 US 73753

(43) Date of publication of application: 25.03.81
Bulletin 81/12

(84) Designated Contracting States: **DE FR GB**

(71) Applicant: **XEROX CORPORATION, Xerox Square - 020, Rochester New York 14644 (US)**

(72) Inventor: **Hou, Hsieh S., 6979 King Harbor Drive, Rancho Palos Verdes California 90274 (US)**
Inventor: **Shenoda, George S., 3208 Spring Meadow Avenue, Thousand Oaks California 91360 (US)**
Inventor: **Parikh, Kedar D., 4456 Elder, Seal Beach California 90740 (US)**
Inventor: **Viero, Bruno J., 26520 Mazur Drive, Rancho Palos Verdes California 90274 (US)**

(74) Representative: **Weatherald, Keith Baynes et al, European Patent Attorney c/o Rank Xerox Limited, Patent Dept. Rank Xerox House 338 Euston Road, London NW1 3BH (GB)**

(54) **Apparatus for converting image scan signals to halftone mapping signals.**

(57) Apparatus for converting an analog voltage representative of an image as generated by a raster input scanner into a one bit per pixel halftone output is described. In one embodiment a high speed conversion is accomplished through the use of eight conversion channels simultaneously processing light successive pixels, each channel comprising a digital to analog converter (10) producing a threshold level which is compared to the raster input scanner output voltage. Random access memories (20, 21) contain sets of threshold level words which are cyclically addressed for each successive scan.

A single channel embodiment requires fewer parts and uses shorter threshold level words.

Apparatus for converting image scan signals to halftone mapping signals

During the transmission and reproduction of text using electronic data transmission systems and marking engines for printing the final hard copy, the image is one of black print on a white background. This information is easily transmitted in binary digits and reproduced as black and white areas.

For the transmission or storage of image data containing shades of gray, a more complex data format is required. One method is to assign a six bit word to each image point, or pixel, which specifies the point as one of 64 shades of gray. The disadvantage of this sytem is that six bits are required to be transmitted or stored for each pixel, which results in low data transmission rates and a greater storage requirement. What is needed is a method of retaining the gray scale while using one bit per pixel.

A second consideration is that in the reproduction of the image on paper, the common office copies and facsimile equipment cannot print gray scale directly. The image must first be reduced to a halftone image, comprising a matrix of black and white bits. Shades of gray are then reproduced by varying the relative size of the dots. In a typical case, a matrix of pixels, eight pixels on a side, would be used to create two black and two white dots. For the most efficient use of transmission and storage facilities, a halftone system using one bit per pixel would be advantageous.

One efficient method of handling gray scale information is to use a continuous analog voltage which is representative of one line of the image, and to convert thatcontinuous analog voltage into a one-bit per pixel halftone bit map before transmission storage or reproduction. Since high raster input scanner rates have become common, it is also necessary that the circuit which accomplishes this halftone conversion must be capable of operating at high data rates.

A further complication is that the matrix values for each matrix position are different, and must be changed from one pixel to the next and from one row to the next. To explain by way of example, let us assume that the first three positions in the first row of the matrix have threshold levels of 12,10, and 8 in a scale of from 0 to 63, and the first three positions in the second row are 14, 0, and 6. The circuit must be able, first, to compare the instant analog input voltage to each new threshold level in the row, and second, to supply a new set of values for each new row, all at practical data rates.

Further, the characteristics of the original image, the raster input scanner and the output marking engine may be compensated for by varying the matrix threshold values. A circuit with a provision for conveniently modifying the matrix values would be useful.

Two circuits for the high speed conversation of an analog input voltage to a one bit per pixel halftone bit map are described herein.

To achieve this conversion at high data rates a higher speed version comprises eight channels operating concurrently to produce the halftone bit maps. Since there are eight pixels per matrix, each channel is loaded with its threshold level at the beginning of the scan and uses that value for the duration of the scan. Between scan lines, the threshold values are changed, but this is accomplished during a short quiescent interval so the data rate is not affected.

Each channel comprises a digital to analog converter to produce a threshold or reference voltage which is compared with the input voltage or pixel at a comparator to generate one binary digit. The eight bit converter input is supplied from the memory of a resident processor or equivalent so that the matrix values may be varied in real time to satisfy varying conditions if required.

A lower cost alternative circuit is also described. The part count is minimized by using a single channel, but the data rate is maintained at a high level through the use of high speed components in the critical portions of the circuit. Here again, the threshold voltages are generated from digital signals output from RAM devices which are reprogrammable between documents.

The object of this invention, therefore, is to provide a circuit which can accomplish the high speed conversion of an analog voltage to a one bit per pixel halftone bit map, and which can vary the matrix values in real time to compensate for variable system characteristics.

The present invention will now be described by way of example with reference to the accompanying drawings, in which:

Fig. 1 is an example of an 8 x 8 matrix of halftone threshold values;

-3-

Fig 2 and 3 are schematics of one embodiment of a halftone conversion circuit, and

Fig. 4 is a circuit of an alternative embodiment of a halftone conversion circuit.

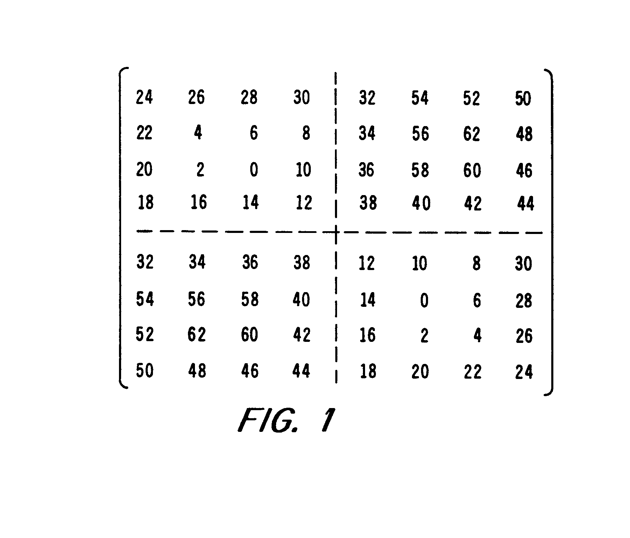

Fig. 1 is an example of a 64 element matrix used in halftone conversion. Each threshold voltage level corresponds to one of 64 points on a scale from white to black. At every sampling point, if the value of the image pixel is larger than the specified threshold value at that point, the output image will appear as a binary white. Otherwise, it will appear black.

The elements are arranged in a double spiral pattern which, for gray shades, results in two white and two black dots, the white dots comprising the upper left and lower right quarters. These dots are "grown" so that, for instance, a light shade of gray will be reproduced as a mainly white matrix with small black dots centered in the upper right and lower left quarters. The resultant halftone image shows a diagonal pattern which may be more pleasing to the eye than a vertical/horizontal pattern.

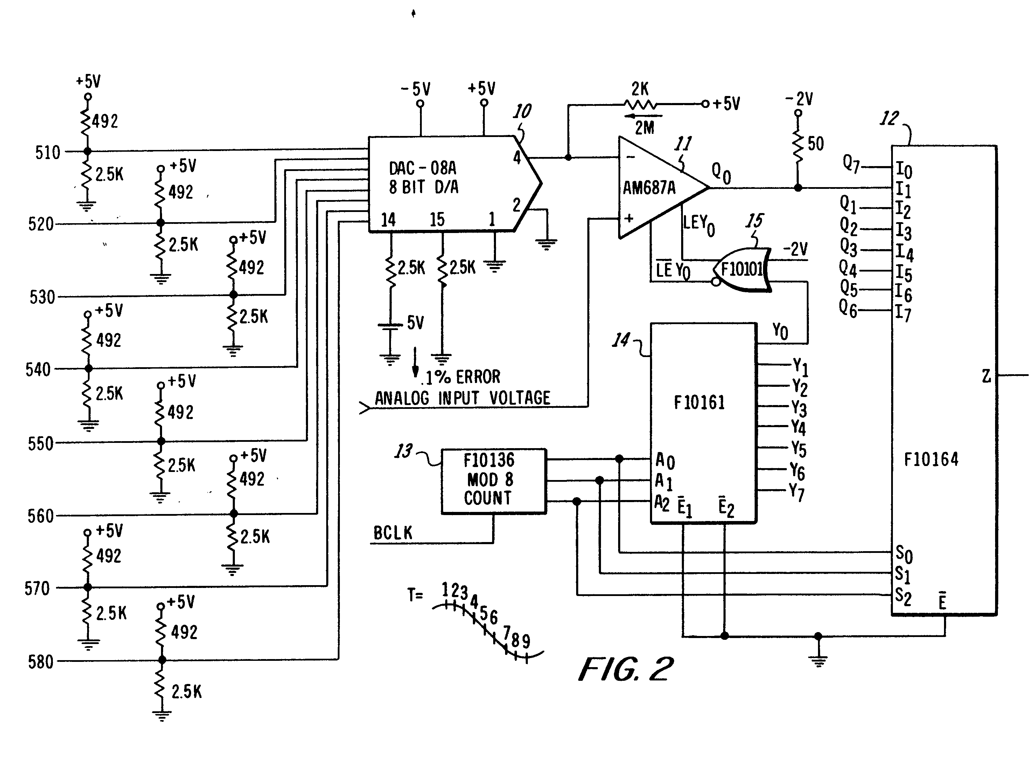

Fig. 2 is the schematic of one of eight channels of the halftone conversion circuit. The digital-to-analog converter 10 receives an eight bit digital input and a five volt reference voltage, shown connected to pin 14, and produces an analog reference voltage at pin 4. A latched comparator 11 compares the analog image input voltage with this reference and produces a binary output which is a one bit pixel of halftone information.

Since there are eight channels, one for each of eight matrix points per row, the digital inputs and voltage output of the converter 10 need not be changed for the duration of the line-scan. The values are updated between scans, but the quiescent time is greater than the converter 10 setting time.

The analog voltage input is shown as a partial sine wave with instantaneous voltages occurring at T=1 to T=9. At T=1 the analog voltage is compared in the comparator of the first channel and an output supplied to multiplexer 12. Later, at T=2, the input is compared at the second channel. This process continues until T=9, when a comparison at the first channel is again read. Therefore, the eight channels are operating simultaneously, and high accuracy is achieved because the digital-to-analog converters 10 and other critical elements operate at bandwidths very much lower than that of the video signal.

The timing for this process is controlled by the mod 8 counter 13 and a decoder 14 which control each comparator 11 through an associated gate 15. Since the analog input voltage is continuously applied to all comparators 11, the mod 8 counter simultaneously selects one comparator 11 through the decoder 14 and the individual channel's gate 15, and selects the associated multiplexer 12 input to enable each channel output.

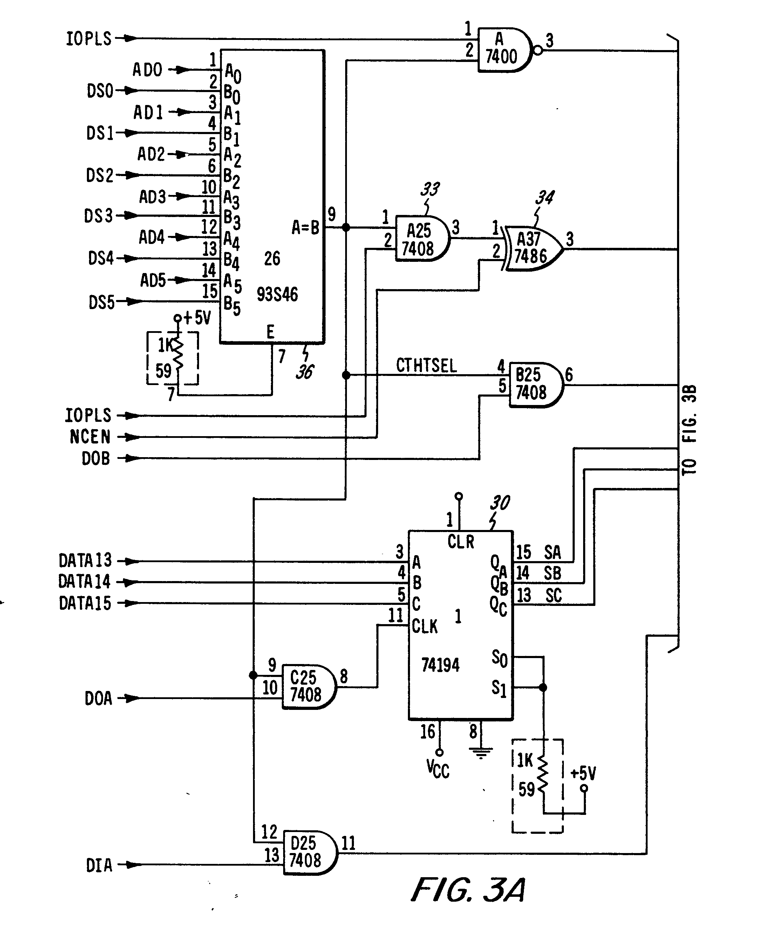

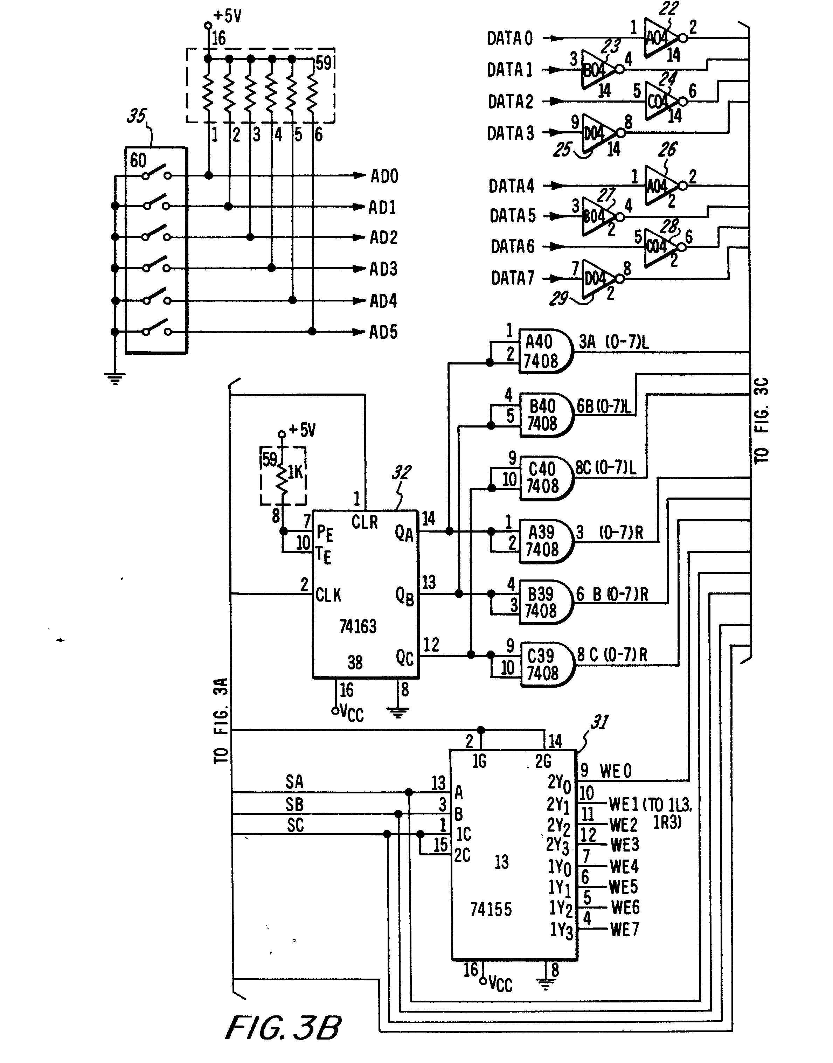

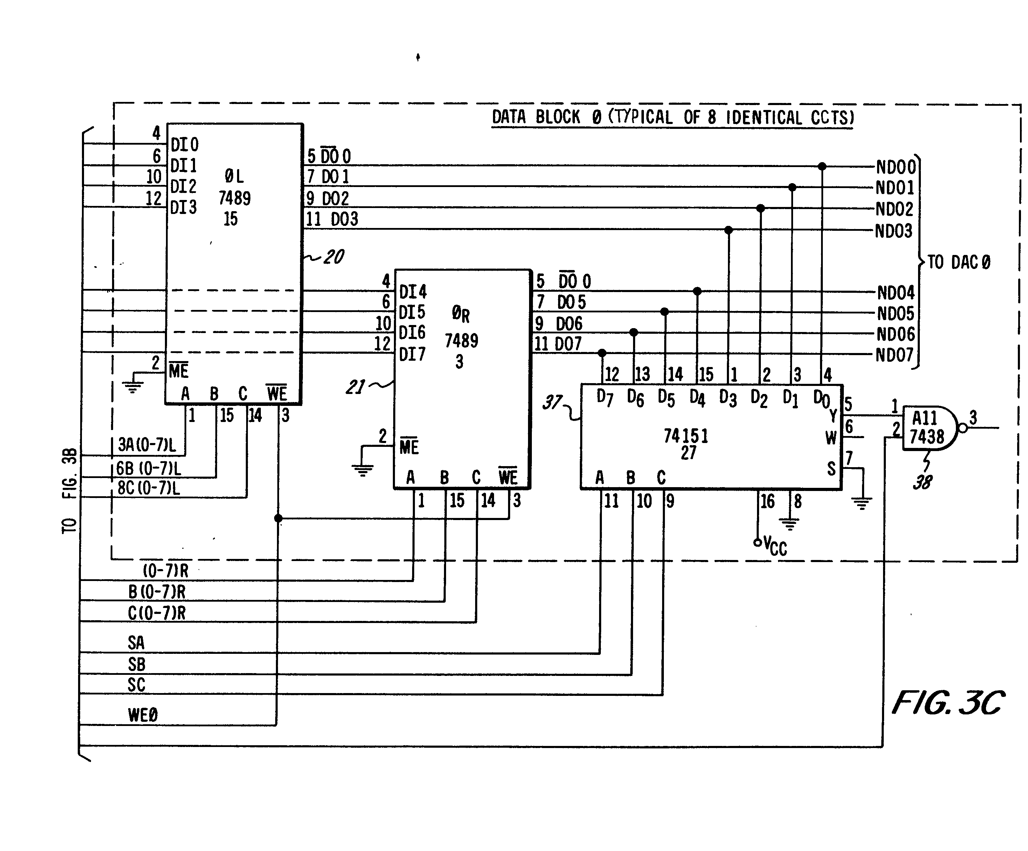

The eight sets of eight bit inputs applied to the converters 10 are applied by the circuit of Fig. 3 which is an interface circuit between a processor which supplies the matrix values and the converters 10 of Fig. 2.

Each set of eight bit threshold values, is supplied to each converter by a pair of memory devices 20, 21 on lines ND00 through ND07. This information is first received from the controlling computer lines on DATA 0 through DATA 7, and is distributed through drives 22 through 29 to the eight sets of memory devices in parallel.

The particular memory device to be loaded is identified by the controller by the bit pattern of lines DATA 13 14, and 15, which is latched into device 30 and decoded in decoder 31 to drive one of eight enable lines WE0 through WE7.

To specify one location in memory devices 20, 21 into which a word is to be loaded, or from which a word is to be read, three address lines are required at inputs A, B and C of memory devices 20 and 21 which are driven by an 8 counter 32. Since there are eight rows per matrix, and the matrix values are updated between raster scan-lines, an eight counter will automatically provide the appropriate address signals once the memory devices are properly programmed. A clock is received from the controller at the end of each scan on line IOPLS and is coupled through gates 33 and 34 to drive the counter 32.

The board is given an address by using a set of switches 35 to establish a bit pattern on lines AD0 through AD5. If the computer calls the board by setting lines DS0 through DS5 to the same pattern, then digital comparator 36 will output a signal to allow the clock pulse IOPLS to be coupled through gate 33 to the 8 counter 32.

To test for the proper loading of information into the memory devices, a multiplexer 37 is included in each channel. In a diagnostic mode, latch 30 controls the multiplexer 37 to select one memory output line, the state of which is coupled through gate 38 to the controller to verify the proper operation of the circuit.

During normal operation, the memory devices 20, 21 are each loaded with eight words when the system is first turned on, and will, thereafter, cycle through these eight words repetitively as each row of each matrix is needed. However, as described previously, during generation a new set of matrix values may be required. This could be accomplished by another loading operation. This, of course, would require a significant amount of loading time and would be done between documents to be scanned.

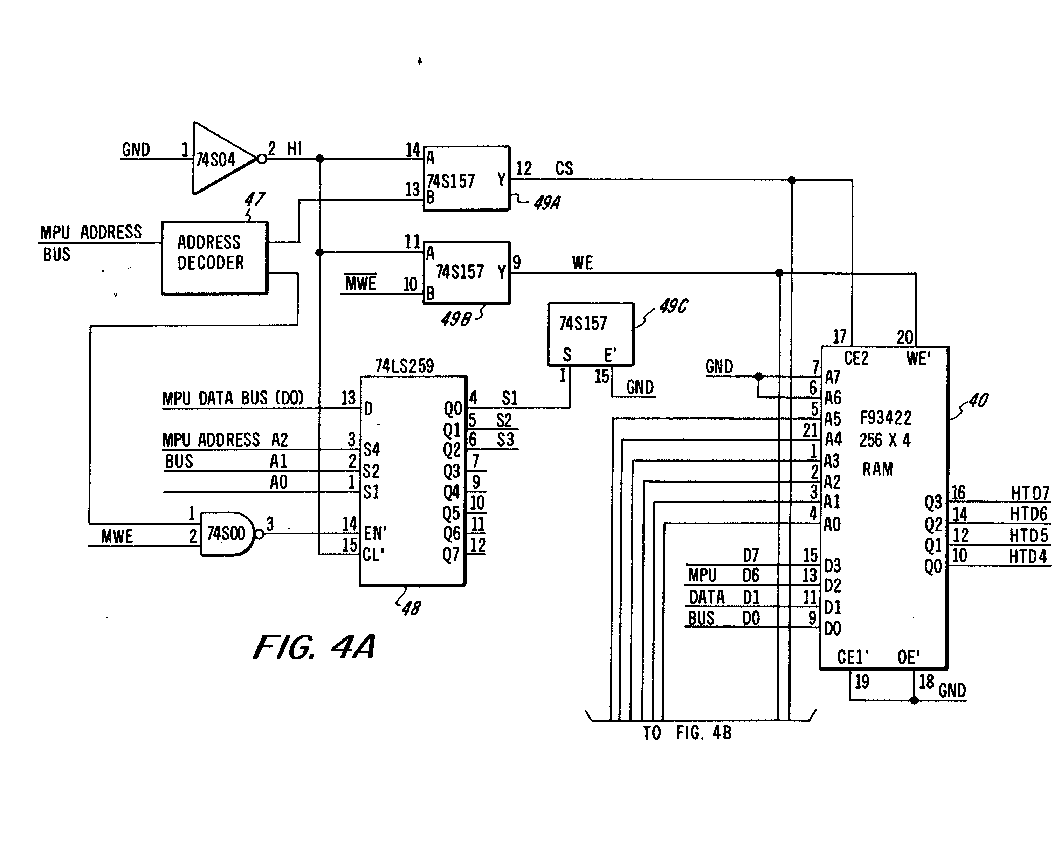

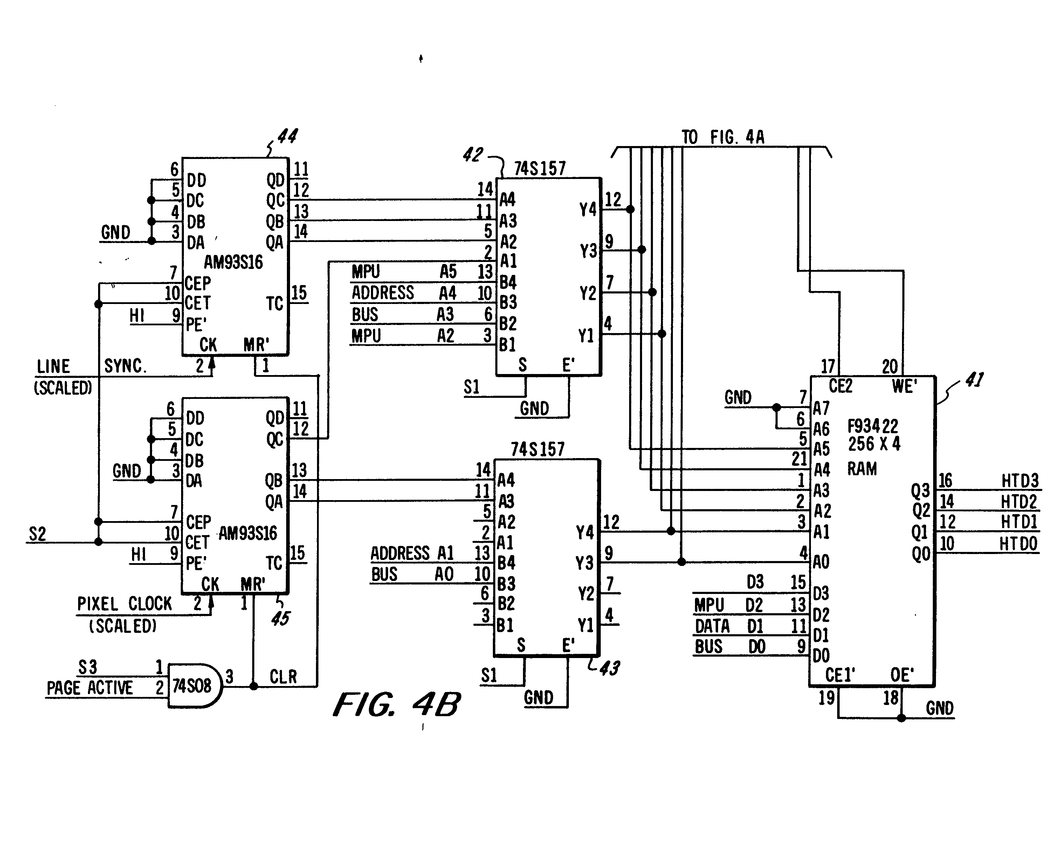

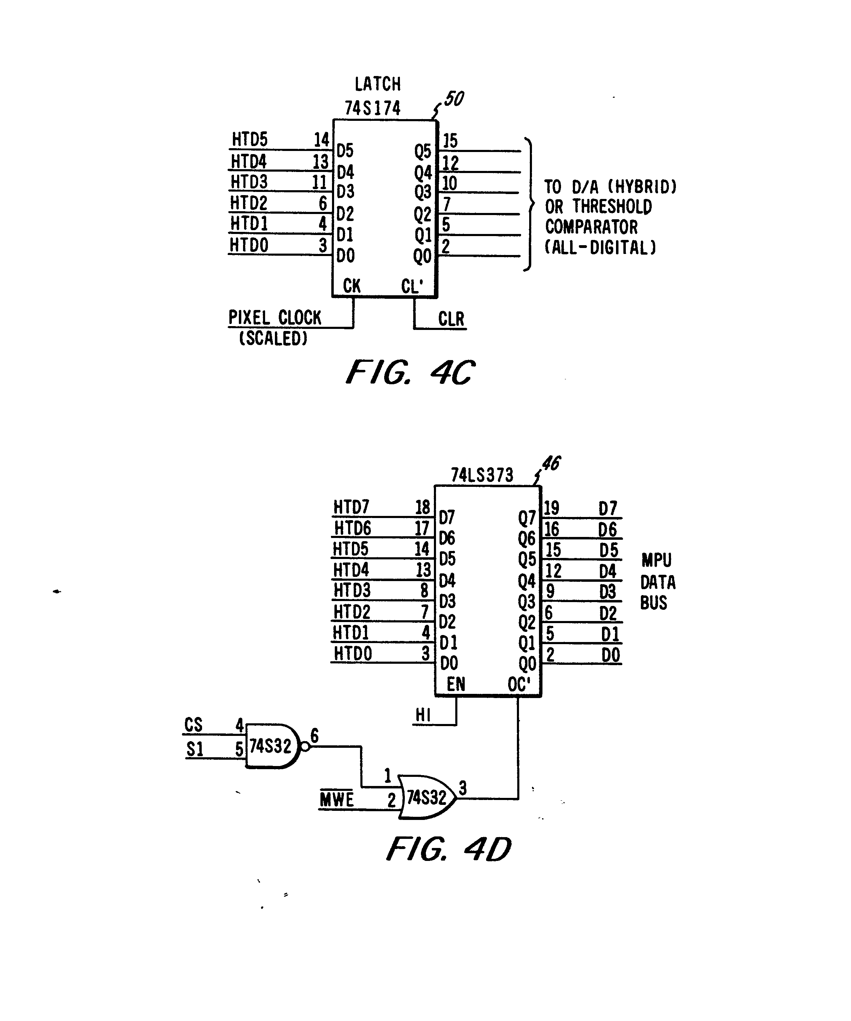

An alternative circuit for generating a series of eight-bit outputs for the converter of Fig. 2 is shown in Fig. 4. In this case, there is only one conversion channel and the RAM of Fig. 4 produces one digital threshold value at a time. This is, therefore, a single channel circuit instead of a circuit with eight channels in parallel but the data rate is half that of the Fig. 2, Fig. 3 equivalent because of the use of faster components, particularly a faster digital-to-analog converter which, however, is less accurate ( 6 bits compared to 8 bits in the circuit of Fig. 2, Fig. 3). Suitable parts for this application are the Signetcis NE5008 and the Analog Devices DAC-08.

In Fig. 4, two 256x4 bit RAMs 40,41 supply an eight bit output HTD0 through HTD7, of which only HDT0 throught HDT5 are used. Data to be loaded into these RAMs 40, 41 are supplied by the Microprocessor Unit (MPU) data bus which is connected directly to the device input pins via lines D0 through D7. Again, only the first six lines are used in this embodiment.

Each RAM 40, 41 receives six bits of addressing information at pins A0 through A5 from multiplexer 42,43. The alternate sources of addressing are the MPU address bus which supplies a six bit address on

lines A0 through A5, and an eight line counter 44, 45 which supplies a six bit address to the multiplexer 42, 43 at pins A1, A2, A3 and A4 multiplexer of 42 and at pins A3 and A4 of mulitplexer 43.

When the RAMs are being addressed by the counter in a "scan" mode, as the raster progresses along a row, the counter must iteratively count to eight. The mod-8 pixel counter 45 accomplishes this function by supplying the least significant three bits of addressing information to the multiplexers 42, 43 and RAMs 40, 41.

Between lines, the matrix, and therefore the RAMs 40, 41, must be switched to the next set of eight values. This is done by incrementing the mod-8 line counter 44 at the end of each line, thereby incrementing the most significant three bits of the RAM 40,41 address.

A pixel clock, one per pixel, is used to increment the pixel counter 45, and a line sync pulse, one per row, is used to increment the line counter 44.

As in the previously described embodiment there is a provision for coupling the RAM 40, 41 output back to the MPU. In this case, all eight bits of RAM 40,41 output are supplied to the inputs of latch 46, the output of which tie directly into the MPU data bus. Latch 46 is a three-state device and does not load the data bus when it is not in use.

The remainder of the circuitry is random logic which allows the circuit to be controlled by an MPU to perform its various subsidiary functions. The SI input to the multiplexers is used during the RAM loading process to select addressing data from the MPU at the same time that data is presented to the RAMs by the MPU data bus. At the same time, the RAMs 40, 41 must be write-enabled. For this purpose, the board is supplied with an address decoder 47 to perform the function of switches 35 and comparator 36 of Fig. 3. When the board address is received at decoder 47 of Fig. 4, it supplies an enabling pulse to decoder 48. This decoder simultaneously receives MPU address bus, A0, A1, A2, to generate an S1, S2,or S3 output. The S3 output is used to reset the counters 44 and 45, and the S2 output is used to enable these counters to run in the scan mode. The S1 output drives the multiplexers 42, 43 to couple either an MPU generated address or a counter 44, 45 address to the RAMs 40, 41 and also to control the write-enable multiplexer 49A, 49B, and 49C to enable the RAMs 50 be loaded from the MPU at the same time that MPU addresses and data are supplied. Multiplexer 49A drives the chip selector lines to the RAMs 40, 41 and multiplexer 49B drives the write enable lines.

The circuit can also be operated in a simple, fixed threshold mode, where all input voltages or pixels are compared against a single threshold level. In this case, address 0 of the memory is loaded with the threshold value. Then, at the beginning of each page the counters are reset to zero and not incremented thereafter by not enabling the counters with an S2 input. In this way, the circuit can be switched from a halftone to a single threshold mode.

The RAM output may be temporarily stored in an output latch. The circuit of latch 50 is a typical arrangement and indicates how six of the eight bits may be clocked out to either a digital comparator or to a digital to-analog converter, if the circuit is all-digital or hybrid, respectively.

- 1 -

Claims

1. Apparatus for converting image scan signals to halftone mapping signals, characterised by

a memory (20, 21, 40, 41) containing $m$ sets of $n$ words, each word in memory comprising a plurality of bits representative of an analog voltage, said words comprising the digital representation of the threshold levels used to create an $m$ x $n$ matrix of threshold voltage levels for the half tone conversion of said input voltage;

a digital to analog converter (10) for converting said memory output to an analog threshold voltage;

a comparator (11) for comparing said input and threshold voltages, and for producing a binary bit therefrom;

an $n$ counter (13) for providing address information to said memory to output $n$ words cyclically during a single scan, and

an $m$ counter (32) for providing address information to said memory to output each of $m$ sets of $n$ words cyclically for each successive raster.

2. The apparatus of claim 1 characterised in that said memory comprises random access memories (40, 40) and a loader (46) for loading said memory with new values to change the characteristics of said matrix.

3. The apparatus of claim 1 or 2, characterised in that $m=n=8$, and in that each word in memory comprises six parallel bits.

4. Apparatus for converting image scan signals to halftone mapping signals, characterised by a plurality of channels, each channel comprising:

a memory (20, 21) for storing a plurality of words, each word comprising a plurality of parallel bits;

a digital to analog converter (10) for converting an output word from said memory into a threshold voltage, and

a comparator (11) for comparing said converter output and said analog voltage, and for producing a binary digit output therefrom; and by

a multiplexer (12) for selecting as the circuit output the output of one comparator, and

a controller (13, 14, 15) for addressing said memory and for controlling the multiplexer to select the output of each comparator cyclically.

5.    The apparatus of claim 4, characterised in that said controller further comprises means for generating a next set of memory addresses at the end of each raster scan, and

a counter (32) coupled to said multiplexer for controlling the multiplexer to select the output of each comparator cyclically to produce a bit per pixel halftone representation of the image.

6.    The apparatus of claim 7, characterised in that said controller further comprises means (37) for loading said memory.

7.    The apparatus of claim 4, or any claim dependent therefrom, characterised in that said circuit comprises eight channels; in that said memory stores eight words per channel to produce an eight by eight element halftone matrix, and in that each word comprises eight parallel bits of information to drive a digital to analog converter having eight input lines.

$$\begin{bmatrix} 24 & 26 & 28 & 30 & 32 & 54 & 52 & 50 \\ 22 & 4 & 6 & 8 & 34 & 56 & 62 & 48 \\ 20 & 2 & 0 & 10 & 36 & 58 & 60 & 46 \\ 18 & 16 & 14 & 12 & 38 & 40 & 42 & 44 \\ 32 & 34 & 36 & 38 & 12 & 10 & 8 & 30 \\ 54 & 56 & 58 & 40 & 14 & 0 & 6 & 28 \\ 52 & 62 & 60 & 42 & 16 & 2 & 4 & 26 \\ 50 & 48 & 46 & 44 & 18 & 20 & 22 & 24 \end{bmatrix}$$

*FIG. 1*

FIG. 2

FIG. 3A

FIG. 3B

FIG. 3C

5/8

0025672

FIG. 4A

FIG. 4B

FIG. 4C

FIG. 4D

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>FR - A - 2 397 112</u> (XEROX)<br><br>* Page 11, line 18 - page 12, line 4; page 13, lines 13-25; page 15, lines 10-35; page 18, line 13 - page 20, line 11; page 22, lines 22-25 *<br><br>& US - A - 4 185 304<br><br>-- | 1-4,6, 7 | G 03 F 1/00<br>H 04 N 1/40 |
| | <u>US - A - 4 032 978</u> (WONG)<br><br>* Column 2, line 57 - column 3, line 7; column 8, lines 11-12; column 9, line 44 - column 10, line 29 *<br><br>-- | 1,4,5 | |
| | 1977 SID International Symposium Digest of Technical Papers; 1977 Society for Information Display, Los Angeles US<br>K.Y. WONG et al.: "Adaptive Switching of Dispersed and Clustered Halftone Patterns for Bi-Level Image Rendition", pages 124-125<br><br>* Page 124, left-hand column, lines 1-26; page 125; figure 3 *<br><br>-- | 1,3,4, 7 | TECHNICAL FIELDS SEARCHED (Int.Cl. 3)<br><br>G 03 F 1/00<br>B 41 C 1/04<br>H 04 N 1/40 |
| | RCA REVIEW, vol. 31, no. 3, September 1970<br>Princeton US<br>R.J. KLENSCH et al.: "Electronically Generated Halftone Pictures" pages 517-533<br><br>* Page 522, lines 24-27; page 524 paragraph 2 - page 525, line 9 *<br><br>---- | 1,3,4, 7 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-12-1980 | DE ROECK |

EPO Form 1503.1 06.78